# FASCICULE DE BREVET EUROPEEN

(11) **EP 1 941 985 B1**
(45) Date de publication et mention de la délivrance du brevet: **08.07.2009**
(21) Numéro de dépôt: 07123948.7
(22) Date de dépôt: 21.12.2007
(51) Int. Cl.: B29C 47/10, B29C 31/04

(54) **Procédé d'alimentation en gomme d'un dispositif consommateur de gomme et installation d'alimentation en gomme de ce dispositif consommateur de gomme**
Gummizuführverfahren für eine Gummikonsumiervorrichtung und Gummizuführanlage zu dieser Gummikonsumiervorrichtung
Method of supplying rubber to a rubber-consuming device and facility for supplying rubber to this rubber-consuming device

(30) Priorité: 03.01.2007 FR 0752514
(43) Date de publication de la demande: 09.07.2008
(73) Titulaire: Société de Technologie Michelin, 63000 Clermont-Ferrand (FR); Michelin Recherche et Technique S.A., 1763 Granges-Paccot (CH)
(72) Inventeur: Nicolas, Serge, 63100 Clermont-Ferrand (FR); Crosnier, Gérard, 63122 Ceyrat (FR); Goy, Daniel, 63118 Cébazat (FR)
(74) Mandataire: de la Bigne, Guillaume Michel Marie

(56) Documents cités:
- GB-A- 615 526
- JP-A- 2005 022 333
- US-A- 3 396 429
- US-A- 3 738 580
- US-A- 3 800 894

## Description

La présente invention concerne un procédé d'alimentation en gomme d'un dispositif consommateur de gomme et une installation d'alimentation en gomme de ce dispositif consommateur de gomme.

Elle s'applique en particulier à l'alimentation en gomme d'une extrudeuse destinée à produire un profilé de gomme pour la fabrication d'un pneumatique.

On connaît déjà dans l'état de la technique un procédé d'alimentation en gomme d'au moins un premier dispositif consommateur de gomme du type dans lequel on déplace en continu une bande de gomme depuis un dispositif fournisseur de gomme vers le premier dispositif consommateur.

Un tel procédé et un tel dispositif sont décrits par exemple dans le documents JP 2005022333 - A GB 615526 - A, US 3738580 - A et US 3800894 - A.

Dans l'application particulière envisagée ci-dessus, l'extrudeuse forme le premier dispositif consommateur de gomme. L'extrudeuse est alimentée par la bande de gomme. La largeur de la bande de gomme doit être adaptée au débit de l'extrudeuse.

On souhaite utiliser dans certaines situations des petites extrudeuses, notamment ayant un débit en gomme extrudée inférieur à 3 kilos par minutes. Un tel débit est satisfaisant compte tenu de l'avantage procuré par l'encombrement limité d'une telle extrudeuse.

L'optimisation de la production de bandes de gomme conduit à fabriquer des bandes relativement larges, typiquement des bandes de 800 à 1000 mm de large. Par conséquent, à moins d'utiliser une extrudeuse surdimensionnée susceptible de consommer directement ce type de bande de gomme relativement large, on tronçonne la bande en plusieurs tronçons ayant chacun une largeur adaptée à une extrudeuse de petit débit. Ceci conduit donc à des opérations coûteuses de tronçonnage réalisées généralement dans un lieu distinct du lieu de consommation de la gomme, de stockage intermédiaire et/ou de manutention des tronçons de bande de gomme.

Le but de la présente invention est de permettre l'utilisation d'extrudeuses de débits variés, notamment de petits débits, ceci en limitant autant que possible les opérations de tronçonnage des bandes de gommes destinées à les alimenter.

A cet effet, l'invention, comme définie dans la revendication 1, a pour objet un procédé d'alimentation en gomme d'au moins un premier dispositif consommateur de gomme, du type précité, dans lequel procédé au cours du déplacement continu, et avant d'atteindre le dispositif consommateur, on prélève en continu une partie, appelée reliquat, de la bande de gomme.

En prélevant une quantité adaptée de reliquat, la bande de gomme alimentant le premier dispositif consommateur est adaptée au débit de ce dernier, quel qu'il soit. Ainsi, l'invention permet de prélever, sur le lieu même de la consommation de la gomme, une proportion de reliquat, par rapport à la bande de gomme, d'autant plus élevée que le dispositif consommateur à une capacité de consommation de gomme faible ou, inversement, d'autant plus faible que le dispositif consommateur à une capacité de consommation de gomme élevée.

On peut ainsi alimenter à partir d'une bande de gomme relativement large, un dispositif consommateur de capacité de consommation indifféremment faible ou élevée, ceci en évitant, dans le cas d'une capacité de consommation faible, un tronçonnage de la bande de gomme hors du lieu de consommation de la gomme, un stockage intermédiaire des tronçons de gomme et des opérations de manutention des tronçons de la bande de gomme initiale.

Le dispositif fournisseur comprend des moyens amont de stockage de la gomme depuis lesquels la bande de gomme est déplacée vers chaque dispositif consommateur.

Selon une autre caractéristique du procédé selon l'invention, on stocke le reliquat dans des moyens aval de stockage.

Selon une autre caractéristique du procédé selon l'invention, on permute les moyens amont et aval de stockage après épuisement de la bande de gomme dans les moyens amont de stockage.

Selon des caractéristiques optionnelles du procédé selon l'invention, qui sont définies dans les revendications dépendantes 2 à 4:
- on prélève le reliquat par découpage en continu d'une bande prélevée de la bande de gomme;
- la bande de reliquat a une largeur comprise entre la moitié et neuf dixièmes de la bande de gomme;
- le premier dispositif consommateur est une extrudeuse.

Ainsi, lorsque la bande de gomme alimentant le premier dispositif consommateur est entièrement consommée, les moyens amont et aval de stockage sont permutés de façon que les moyens de stockage comprenant le reliquat forment à leur tour le dispositif fournisseur de gomme. L'opération de permutation peut être réalisée autant de fois que la largeur de la bande initiale et le débit du dispositif consommateur le permettent.

De plus, la dernière bande d'alimentation correspondant au dernier reliquat peut alimenter directement le dispositif consommateur, ce qui permet de recharger les moyens amont de stockage en temps masqué, sans interruption de la production.

Selon un mode de réalisation non revendiqué du procédé, on alimente un second dispositif consommateur de gomme avec le reliquat.

Dans le cas où la bande de gomme présente une largeur adaptée à l'alimentation de deux dispositifs consommateurs, on adapte la largeur de la bande alimentant le premier dispositif consommateur à la capacité de consommation de ce premier dispositif consommateur et la largeur du reliquat à la capacité de consommation du second dispositif consommateur. On évite alors de stocker le reliquat.

La régulation de la largeur de découpe à l'aide d'un moyen approprié permet enfin d'ajuster en temps réel le débit d'alimentation du dispositif consommateur ce qui peut s'avérer particulièrement intéressant lorsque ce dernier doit s'adapter à des variations liées au processus de fabrication aval.

L'invention, comme définie dans la revendication 5, a également pour objet une installation d'alimentation en gomme d'au moins un premier dispositif consommateur de gomme, du type comprenant des moyens de déplacement en continu d'une bande de gomme depuis un dispositif fournisseur de gomme vers le premier dispositif consommateur, caractérisée en ce qu'elle comprend des moyens de prélèvement en continu d'une partie, appelée reliquat, de la bande de gomme, ces moyens de prélèvement étant agencés en amont du premier dispositif consommateur, des moyens amont de stockage de gomme depuis lesquels la bande de gomme est destinée à être déplacée vers chaque dispositif consommateur, le dispositif fournisseur comprenant des moyens aval de stockage du reliquat, l'installation comprenant des moyens de permutation des moyens amont et aval de stockage.

Une telle installation permet de prélever le reliquat de façon que la bande de gomme alimentant le premier dispositif consommateur soit adaptée à ce premier dispositif consommateur.

Selon des caractéristiques optionnelles de l'installation selon l'invention, qui sont définies dans les revendications dépendantes 6 à 10:
- les moyens de prélèvement comprennent des moyens de découpage en continu d'une bande prélevée de la bande de gomme;
- l'installation comprend des moyens de positionnement automatique transversal des moyens de découpage par rapport à des bords longitudinaux de la bande de gomme. De tels moyens sont avantageux car ils permettent d'avoir une bande de reliquat de largeur variable et une bande alimentant le dispositif consommateur de largeur constante. Une telle installation est donc avantageuse dans le cas où la bande de gomme présente des bords longitudinaux irréguliers;
- le premier dispositif consommateur est une extrudeuse;
- l'extrudeuse comprend une vis sans fin d'extrusion de diamètre inférieur à 90 millimètres, l'extrudeuse ayant, le cas échéant un débit de gomme extrudée inférieur à 3 kilos par minute;
- les moyens de permutation comprennent un support mobile en rotation autour d'un axe, les moyens amont et aval de stockage étant portés par le support mobile. De tels moyens de permutation sont efficaces et simples à réaliser.

Selon un mode de réalisation non revendiqué de l'installation, l'installation comprend un second dispositif consommateur de gomme destiné à être alimenté par le reliquat.

Selon une autre caractéristique optionnelle de l'installation selon l'invention, comme définie dans la revendication 11, l'installation comprend des moyens de régulation du débit d'alimentation d'au moins le premier dispositif consommateur par régulation de la largeur du reliquat.

De tels moyens de régulation permettent d'adapter la largeur de la bande de gomme au débit du premier dispositif consommateur, qui peut être variable.

L'invention sera mieux comprise à la lecture de la description qui va suivre, donnée uniquement à titre d'exemple non limitatif et faite en se référant aux dessins dans lesquels :
- la figure 1 représente une vue schématique en élévation d'une installation d'alimentation en gomme selon un mode de réalisation de l'invention ;
- la figure 2 représente une vue schématique en élévation d'une installation d'alimentation en gomme selon un mode de réalisation non revendiqué de l'installation.

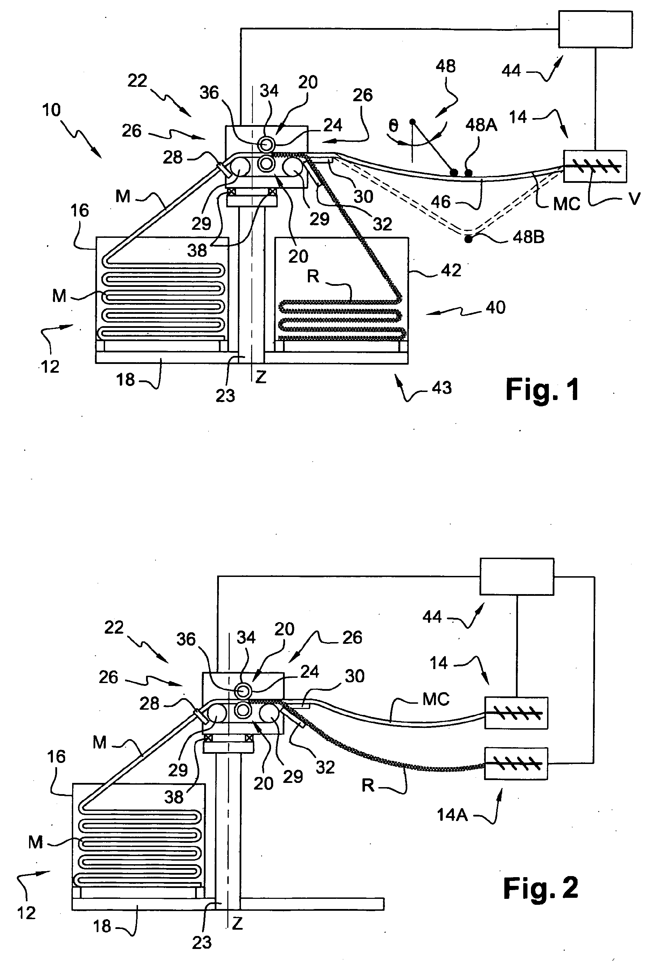

On a représenté sur la figure 1 une installation d'alimentation en gomme, selon un mode de réalisation de l'invention, désignée par la référence générale 10.

L'installation 10 comprend un dispositif 12 fournisseur de gomme et un dispositif 14 consommateur de cette gomme.

Dans ce qui suit, on distinguera les moyens amont et aval de l'installation 10 en se référant au sens de déplacement de la gomme, du dispositif fournisseur 12 vers le dispositif consommateur 14.

Dans ce mode de réalisation de l'invention, le dispositif 12 fournisseur de gomme comprend des moyens amont 16 de stockage de gomme, par exemple une palette dans laquelle est stockée une bande de gomme M.

La bande de gomme M est destinée à être déplacée depuis le dispositif fournisseur 12 vers le dispositif consommateur 14 à l'aide de moyens qui seront décrits ultérieurement.

Dans l'exemple décrit, la bande de gomme M a une largeur d'environ 200 mm et une épaisseur moyenne d'environ 10 mm. En variante, les largeur et épaisseur de la bande de gomme pourraient être différentes. En particulier, la largeur de la bande de gomme pourrait être supérieure à 200 mm et atteindre 800 mm. La bande de gomme M est pliée longitudinalement en boustrophédon dans les moyens amont de stockage 16.

Les moyens amont de stockage 16 sont portés par une embase 18 formant un premier support monté mobile en rotation autour d'un axe géométrique Z sensiblement vertical.

Afin de déplacer la bande de gomme vers le dispositif consommateur 14, l'installation 10 comprend des moyens de déplacement 20 portés par un support 22. Le support 22 est porté par un mât 23 vertical dont l'axe coïncide sensiblement avec l'axe Z. Plus particulièrement, les moyens de déplacement 20 comprennent deux rouleaux d'entraînement 24 superposés, montés rotatifs autour d'axes respectifs parallèles, sur le support 22. La bande de gomme M est entraînée par passage entre ces rouleaux 24.

Le support 22 porte également des moyens 26 de guidage de la bande de gomme M à travers le support 22.

Les moyens de guidage 26 comprennent, par exemple, un organe de guidage amont, formant passant 28, deux rouleaux de guidage 29 montés rotatifs sur le support 22 respectivement en amont et en aval des rouleaux d'entraînement 24, et deux organes de guidage aval, formés par des plateaux 30, 32.

Le dispositif consommateur 14, formé par l'extrudeuse, comprend une vis sans fin d'extrusion V. Dans l'exemple décrit, le diamètre de la vis sans fin V est inférieur à 90 mm si bien que l'extrudeuse a une capacité de consommation de gomme relativement limitée, le débit de gomme extrudée restant inférieur à 3 kg/minute. L'extrudeuse consomme le reste de la bande de gomme, désigné par la référence MC.

Pour adapter la largeur de la bande de gomme M à la capacité relativement faible de consommation du dispositif 14, l'installation 10 comprend des moyens 34 de prélèvement continu d'une partie, appelée reliquat R, de la bande de gomme M. Ces moyens de prélèvement 34 sont agencés en amont du dispositif consommateur 14.

Ainsi, dans l'exemple illustré, les moyens de prélèvement 34 comprennent des moyens 36 de découpage en continu d'une bande prélevée de la bande de gomme M. Ces moyens de découpage 36, portés par les rouleaux d'entraînement 24, comprennent au moins une lame rotative, portée par un des rouleaux d'entraînement 24, voire deux lames rotatives, portées par les deux rouleaux d'entraînement 24, formant ciseaux.

De façon que la position transversale de la bande de gomme M par rapport à la direction longitudinale de découpage de la bande de reliquat R reste sensiblement constante, l'installation 10 comprend des moyens 38 de positionnement automatique transversal des moyens de découpage 34 par rapport à des bords longitudinaux de la bande de gomme M.

Ainsi, dans l'exemple illustré, les moyens de positionnement transversal 38 sont agencés entre le support 22 et l'extrémité supérieure du mât 23.

Dans ce mode de réalisation de l'invention, l'installation 10 comprend des moyens aval 40 de stockage du reliquat R. Ces moyens aval 40 comprennent, par exemple, une palette 42 portée par l'embase 18. Cette embase 18 forme ainsi des moyens 43 de permutation des moyens de stockage amont 12 et aval 40.

De préférence, l'installation 10 comprend également des moyens 44 de régulation du débit d'alimentation du dispositif consommateur 14 par régulation de la largeur de la bande de gomme formant le reliquat R.

Entre le dispositif consommateur 14 et l'installation d'alimentation 10, il est possible de former dans la bande MC une boucle de compensation 46 de longueur variable. La variation de longueur de la boucle 46 peut-être détectée à l'aide de moyens 48 de détection continue de cette variation, par exemple un palpeur oscillant 50 dont l'angle d'oscillation θ évolue avec la variation de longueur de la boucle, ou en variante à l'aide de moyens 48A, 48B de détection d'extrema de la longueur de la boucle. Sur la figure 1, la boucle 46 est représentée en traits pleins lorsqu'elle a une longueur minimale et en pointillés lorsqu'elle a une longueur maximale.

D'autres types de moyens 48 de détection de la variation de longueur peuvent être utilisés, avec ou sans contact avec la boucle.

L'installation 10 permet de mettre en oeuvre un procédé d'alimentation en gomme du dispositif consommateur 14 dont on précisera ci-dessous les principaux aspects liés à l'invention.

Pour alimenter en gomme le dispositif consommateur 14, on déplace en continu la bande de gomme M depuis le dispositif fournisseur 12 vers le dispositif consommateur 14 à l'aide des moyens de déplacement 20.

Au cours de ce déplacement continu, et avant d'atteindre le dispositif consommateur 14, on prélève en continu le reliquat R à l'aide des moyens 34.

Dans l'exemple décrit, le reliquat R est prélevé par découpage en continu de la bande formant la bande de gomme M. De préférence, la bande de reliquat a une largeur comprise entre la moitié et neuf dixièmes de la bande de gomme.

Au fur et à mesure du prélèvement du reliquat R, ce dernier est stocké dans les moyens 40. Après épuisement de la bande de gomme M dans les moyens amont 12 de stockage, on permute ces moyens amont 12 avec les moyens de stockage aval 40 qui tiennent lieu par la suite de moyens de stockage amont. Le reliquat R est, comme la bande de gomme M initiale, déplacé en continu depuis le dispositif fournisseur 12 vers le dispositif consommateur 14, un nouveau reliquat étant prélevé lors de ce déplacement de façon analogue à ce qui a été décrit précédemment.

On règle la vitesse de défilement en fonction des variations de la longueur de la boucle. Les moyens 48 de détection continue permettent une régulation en continu de cette vitesse. Les moyens 48A, 48B de détection d'extrema de la longueur de la boucle permettent une régulation par mise en marche ou arrêt des moyens de déplacement 20.

Sur la figure 2, on a représenté une installation 10 selon un mode de réalisation non revendiqué. Sur cette figure 2, les éléments analogues à ceux de la figure 1 sont désignés par des références identiques.

Dans ce cas, l'installation 10 comprend deux dispositifs consommateurs de gomme, à savoir le premier dispositif 14 tel que décrit précédemment et un second dispositif 14A, formé par exemple comme le premier dispositif 14, par une extrudeuse.

On alimente le second dispositif consommateur 14A avec le reliquat R. Le cas échéant, on régule les débits d'alimentation des deux dispositifs consommateurs 14, 14A de façon à ce qu'ils soient identiques, en régulant la largeur du reliquat R à l'aide des moyens 44. Dans le cas où les premier 14 et second 14A dispositifs consommateurs sont formés par deux extrudeuses dont les débits en gomme extrudée sont différents, on peut également réguler les débits d'alimentation à l'aide des moyens 44.

## Revendications

1. Procédé d'alimentation en gomme d'au moins un premier dispositif consommateur (14) de gomme, du type dans lequel on déplace en continu une bande de gomme (M) depuis un dispositif (12) fournisseur de gomme vers le premier dispositif consommateur (14), dans lequel procédé au cours du déplacement continu et avant d'atteindre le dispositif consommateur (14), on prélève en continu une partie, appelée reliquat (R), de la bande de gomme (M), on stocke le reliquat (R) dans des moyens aval (40) de stockage, le dispositif fournisseur (12) comprenant des moyens amont (16) de stockage de la gomme depuis lesquels la bande de gomme (M) est déplacée vers chaque dispositif consommateur (14) et on permute les moyens amont (16) et aval (40) de stockage après épuisement de la bande de gomme (M) dans les moyens amont (16) de stockage.

2. Procédé selon la revendication 1, dans lequel on prélève le reliquat (R) par découpage en continu d'une bande prélevée de la bande de gomme (M).

3. Procédé selon la revendication 1 ou 2, dans lequel la bande de reliquat (R) a une largeur comprise entre la moitié et neuf dixièmes de la bande de gomme.

4. Procédé selon l'une quelconque des revendications précédentes, dans lequel le premier dispositif consommateur (14) est une extrudeuse.

5. Installation (10) d'alimentation en gomme d'au moins un premier dispositif (14) consommateur de gomme, du type comprenant des moyens (20) de déplacement en continu d'une bande de gomme (M) depuis un dispositif (12) fournisseur de gomme vers le premier dispositif consommateur (14), **caractérisée en ce qu'**elle comprend des moyens de prélèvement (24) en continu d'une partie, appelée reliquat, de la bande de gomme (M), ces moyens de prélèvement (24) étant agencés en amont du premier dispositif consommateur (14), des moyens amont (16) de stockage de gomme depuis lesquels la bande de gomme (M) est destinée à être déplacée vers chaque dispositif consommateur (14), le dispositif fournisseur (12) comprenant des moyens aval (40) de stockage du reliquat, l'installation comprenant des moyens (43) de permutation des moyens amont (16) et aval (40) de stockage.

6. Installation (10) selon la revendication 5, dans laquelle les moyens de prélèvement (24) comprennent des moyens (34) de découpage en continu d'une bande prélevée de la bande de gomme (M).

7. Installation (10) selon la revendication 7, comprenant des moyens (38) de positionnement automatique transversal des moyens de découpage (34) par rapport à des bords longitudinaux de la bande de gomme (M).

8. Installation (10) selon l'une quelconque des revendications 5 à 7, dans laquelle le premier dispositif consommateur (14) est une extrudeuse.

9. Installation (10) selon la revendication 8, dans laquelle l'extrudeuse (14) comprend une vis sans fin d'extrusion (V) de diamètre inférieur à 90 millimètres, l'extrudeuse (14) ayant, le cas échéant, un débit de gomme extrudée inférieur à 3 kilos par minute.

10. Installation (10) selon l'une quelconque des revendications 5 à 9, dans laquelle les moyens de permutation (43) comprennent un support (18) mobile en rotation autour d'un axe (Z), les moyens amont (16) et aval (40) de stockage étant portés par le support mobile (18).

11. Installation (10) selon l'une quelconque des revendications 5 à 10, comprenant des moyens (44) de régulation du débit d'alimentation d'au moins le premier dispositif consommateur (14) par régulation de la largeur du reliquat (R).

## Claims

1. A method of feeding rubber to at least one rubber-consumer device (14), the method being of the type in which a strip of rubber (M) is moved continuously from a rubber-supplier device (12) to the first consumer device (14), the method being **characterized in that** during the continuous movement and before reaching the consumer device (14), a portion, referred to as the residue (R) is taken continuously from the strip of rubber (M) and stored in downstream storage means (40), the supplier device (12) including upstream storage means (16) for storing rubber from which the strip of rubber (M) is moved towards each consumer device (14), with the upstream and downstream storage means (16, 40) being swapped after the strip of rubber (M) in the upstream storage means (16) has been used up.

2. A method according to claim 1, in which the residue (R) is taken by continuously cutting off a residue strip from the strip of rubber (M).

3. A method according to claim 1 or claim 2, in which the residue strip (R) presents a width lying in the range one-half to nine-tenths the width of the strip of rubber.

4. A method according to any preceding claim, in which the first consumer device (14) is an extruder.

5. An installation (10) for feeding rubber to at least one rubber-consumer device (14), the installation being of the type comprising means (20) for continuously moving a strip of rubber (M) from a rubber-supplier device (12) to the first consumer device (14), the installation being **characterized in that** it includes taker means (24) for continuously taking a portion, referred to as the residue, from the strip of rubber (M), said taker means (24) being arranged upstream from the first consumer device (14), upstream rubber storage means (16) from which the strip of rubber (M) is for being moved towards each consumer device (14), the supplier device (12) further including downstream storage means (40) for storing the residue, and swap means (43) for swapping the upstream and downstream storage means (16 and 40).

6. An installation (10) according to claim 5, in which the taker means (24) comprise means (34) for continuously cutting off a strip that is taken from the strip of rubber (M).

7. An installation (10) according to claim 7, including means (38) for automatically positioning cutter means (34) transversely relative to the longitudinal edges of the strip of rubber (M).

8. An installation (10) according to any one of claims 5 to 7, in which the first consumer device (14) is an extruder.

9. An installation (10) according to claim 8, in which the extruder (14) comprises an extruder worm screw (V) of diameter less than 90 mm, the extruder (14) presenting, where appropriate, an extruded rubber delivery rate of less than 3 kg/min.

10. An installation (10) according to any one of claims 5 to 9, in which the swap means (43) comprise a movable support (18) movable in rotation about an axis (Z), the upstream and downstream storage means (16, 40) being carried by the movable support (18).

11. An installation (10) according to any one of claims 5 to 10, including means (44) for regulating the rate at which at least the first consumer device (14) is fed by regulating the width of the residue (R).

## Patentansprüche

1. Verfahren zur Versorgung zumindest einer ersten Gummiverbrauchseinrichtung (14) mit Gummi, bei welchem ein Gummiband (M) ausgehend von einer Gummizuführungseinrichtung (12) kontinuierlich zur ersten Verbrauchseinrichtung (14) gefördert wird, in welchem Verfahren, im Verlauf der kontinuierlichen Förderung und vor Erreichen der Verbrauchseinrichtung (14), ein Teil, bezeichnet als Rest (R), des Gummibandes (M) kontinuierlich entnommen wird, der Rest (R) in stromab befindlichen Lagerungsmitteln (40) gelagert wird, wobei die Zuführungseinrichtung (12) stromauf befindliche Mittel (16) zur Lagerung des Gummis umfasst, von denen aus das Gummiband (M) zu jeder Verbrauchseinrichtung (14) gefördert wird, und die stromauf befindlichen (16) und die stromab befindlichen (40) Lagerungsmittel vertauscht werden nach Aufbrauchen des Gummibandes (M) in den stromauf befindlichen Lagerungsmitteln (16).

2. Verfahren nach Anspruch 1, bei welchem der Rest (R) entnommen wird durch kontinuierliches Schneiden eines dem Gummiband (M) entnommenen Bandes.

3. Verfahren nach Anspruch 1 oder 2, bei welchem das Band des Rests (R) eine Größe besitzt, die zwischen der Hälfte und neun Zehnteln des Gummibandes liegt.

4. Verfahren nach einem der vorstehenden Ansprüche, bei welchem die erste Verbrauchseinrichtung (14) ein Extruder ist.

5. Anlage (10) zur Versorgung zumindest einer ersten Gummiverbrauchseinrichtung (14) mit Gummi, umfassend Mittel (20) zur kontinuierlichen Förderung eines Gummibandes (M) von einer Gummizuführungseinrichtung (12) zur ersten Verbrauchseinrichtung (14), **dadurch gekennzeichnet, dass** sie Mittel (24) zur kontinuierlichen Entnahme eines Teils, bezeichnet als Rest, des Gummibandes (M) umfasst, wobei diese Entnahmemittel (24) stromauf der ersten Verbrauchseinrichtung (14) angeordnet sind, stromauf befindliche Mittel (16) zur Lagerung von Gummi, von denen aus das Gummiband (M) zu jeder Verbrauchseinrichtung (14) gefördert wird, wobei die Zuführungseinrichtung (12) stromab befindliche Mittel (40) zur Lagerung des Rests umfasst, wobei die Anlage Mittel (43) zur Vertauschung der stromauf (16) und stromab (40) befindlichen Lagerungsmittel umfasst.

6. Anlage (10) nach Anspruch 5, bei welcher die Entnahmemittel (24) Mittel (34) zum kontinuierlichen Schneiden eines dem Gummiband (M) entnommenen Bandes umfassen.

7. Anlage (10) nach Anspruch 7, umfassend Mittel (38) zur transversalen automatischen Positionierung der Schneidemittel (34) in Bezug auf Längskanten des Gummibandes (M).

8. Anlage (10) nach einem der Ansprüche 5 bis 7, bei welcher die erste Verbrauchseinrichtung (14) ein Extruder ist.

9. Anlage (10) nach Anspruch 8, bei welcher der Extruder (14) ein Extrusions-Schneckengetriebe (V) mit einem Durchmesser unter 90 Millimetern umfasst, wobei der Extruder (14) gegebenenfalls einen Durchsatz extrudierten Gummis unter 3 Kilo pro Minute aufweist.

10. Anlage (10) nach einem der Ansprüche 5 bis 9, bei welcher die Vertauschungsmittel (43) einen Träger (18) umfassen, der um eine Achse (Z) drehbar ist, wobei die stromauf (16) und stromab (40) befindlichen Lagerungsmittel von dem mobilen Träger (18) getragen werden.

11. Anlage (10) nach einem der Ansprüche 5 bis 10, umfassend Mittel (44) zur Regulierung des Versorgungsflusses zumindest der ersten Verbrauchseinrichtung (14) durch Regulierung der Größe des Rests (R).
